# EUROPEAN PATENT APPLICATION

(11) **EP 2 526 757 A1**
(43) Date of publication of application: **28.11.2012**
(21) Application number: 12169121.6
(22) Date of filing: 23.05.2012
(51) Int. Cl.: A01D 34/00, A01D 34/66

(54) **A test method for a mower and a test apparatus**

(30) Priority: 25.05.2011 DK 201170258
(71) Applicant: Kongskilde Industries A/S, 4180 Sorø (DK)
(72) Inventor: Freudendahl, Jørn, 6400 Sønderborg (DK)
(74) Representative: Joergensen, Bjoern Barker

(57) **Abstract**

The test apparatus is for testing an agricultural mower having a line (39) of rotating elements each of which is carrying at least one cutting blade (43) rotatably attached to the rotating element (41), and the apparatus comprises a solid body (29) and means (3, 5, 11, 25, 27, 23, 15) for moving the solid body (29) and the line (39) of rotating elements into mutual engagement and maintaining the engagement for a time with a limited force.

## Description

The present invention relates to a test method and a test apparatus for testing an agricultural mower having a line of rotating elements each of which is carrying at least one cutting blade rotatably attached to the rotating element.

Agricultural mowers of the above art are generally categorized in one of two groups, namely drum mowers, in which a number of rotating drum shaped elements depending from a frame member comprising a drive train carry at their lower ends relatively large horizontal discs at the periphery of which the cutting blades are mounted, and disc mowers, which comprise cutter bars on which a number of relatively small rotating discs are mounted to be driven through a drive train housed in the cutter bar, the cutting blades being mounted at the peripheries of the rotating discs.

During work the rotating elements are rotating at high speed, e.g. 3000 rpm for the relatively small discs of a disc mower, and fracture of a cutting blade during operation entails a risk of fragments being thrown from the mower at large speed jeopardizing the safety of persons and material in the vicinity. Fracture of a cutting blade is especially a risk at encounter with obstacles such as stones or rocks in the field.

To test the quality of cutting blades for mowers certain test methods are known such as a bending test, whereby a cutting blade is bend by means of a standardized bending tool, and an impact test, whereby a cutting blade is run through a path under circumstances, e.g. speed, similar to the circumstances during operation and a solid rod is moved into a position in the path of the cutting blade for impact with the blade. After the bending test or the impact test the damage upon the cutting blade is evaluated and a lot of cutting blades represented by the cutting blade actually tested is accepted for use or rejected.

However these known methods do not test the cutting blades in realistic circumstances and further, fractures resulting in fragments being thrown from the mower may occur in other places than in the cutting blades proper.

Thus it is an object of the invention to provide a test method and a test apparatus providing for testing cutting blades under more realistic circumstances as compared to the above known methods and preferably also providing for testing other components of a mower than the cutting blades.

This is obtained by a method as mentioned by way of introduction, said comprising providing a solid body, running said rotating elements at an operation speed and moving in a direction of movement said solid body and the line of rotating elements with the cutting blades into mutual engagement and maintaining the engagement for a time with a limited force. As the solid body may resemble a rock or stone in a field and the cutting blade is mounted in normal operation conditions, this method will provide results revealing more realistically the hazards or quality of a cutting blade, and also of its mounting, etc.

Preferably the limited force is a spring force acting in the direction of movement.

In a practical embodiment the solid body comprises a planar engagement surface for the engagement with the line of rotating element said engagement surface being kept at a predetermined angular position. This facilitates standardizing the test.

In accordance with the angular position preferably a horizontal line defined by a horizontal section of the engagement surface extends perpendicular to the direction of movement.

Preferably a vertical section of the engagement surface parallel to the direction of movement extends at a predetermined angle of attack relative to horizontal. By adjusting the predetermined angle it is possible to test for different situations corresponding to encounter with stones or rocks of different size to get a better overall view of the quality of the tested items.

In a practical embodiment the mower including the line of rotating elements is kept at a predetermined position similar to a working position and the solid body is moved in a horizontal plane against the mower.

Preferably the direction of movement is similar to a travelling direction of the mower during mowing operation.

The object is also obtained by an apparatus as mentioned by way of introduction, said apparatus comprising a solid body and means for moving the solid body and the line of rotating elements into mutual engagement and maintaining the engagement for a time with a limited force.

Preferably the means for moving the solid body and the line of rotating elements into mutual engagement comprise a drive train incorporating a force transmitting spring.

In a preferred embodiment the solid body comprises a planar engagement surface for the engagement with the line of rotating element, and means are provided for holding said engagement surface in a predetermined angular position.

Preferably the solid body is mounted for angular adjustment around a horizontal axis non-parallel, preferably perpendicular, to a direction of movement.

In a preferred embodiment the test apparatus comprises a movable frame mounting the solid body. This provides for moving the solid body relative to a mower in a fixed position thus facilitating the standardization of the test conditions.

Further the movable frame is preferably slidable mounted in a running frame for shifting movement against a spring force, and means are provided for moving the running frame. This facilitates the maintaining of the engagement between the mower parts and the engagement surface at a limit force.

In a preferred embodiment the test apparatus comprises a base member configured for a tractor to stand on, and the drive train comprise a drive member acting between the base member and the running frame for moving the latter. This provides for testing a mower while attached to a tractor as it would be during normal operation.

In a practical further embodiment the drive member comprises a hydraulic cylinder. Thus the drive member may be activated by means of the hydraulic system of the tractor.

In the following the invention will be explained in further detail by means of an example of an embodiment having reference to the enclosed schematic drawings, in which
Fig. 1 shows a test apparatus according to the invention and a lift suspended disc mower in a lifted headland position,
Fig. 2 shows a vertical section along line II-II in Fig. 1 of a cutter bar assembly of the mower,
Fig. 3 shows the cutter bar and an engagement surface before starting a test procedure with an angle of attack of approximately 30°,
Fig. 4 shows the cutter bar and the engagement surface during the test procedure,
Fig. 5 shows the engagement surface with a steeper angle of attack of approximately 67°.
Fig. 6 shows the engagement surface with an angle of attack of approximately 120°.

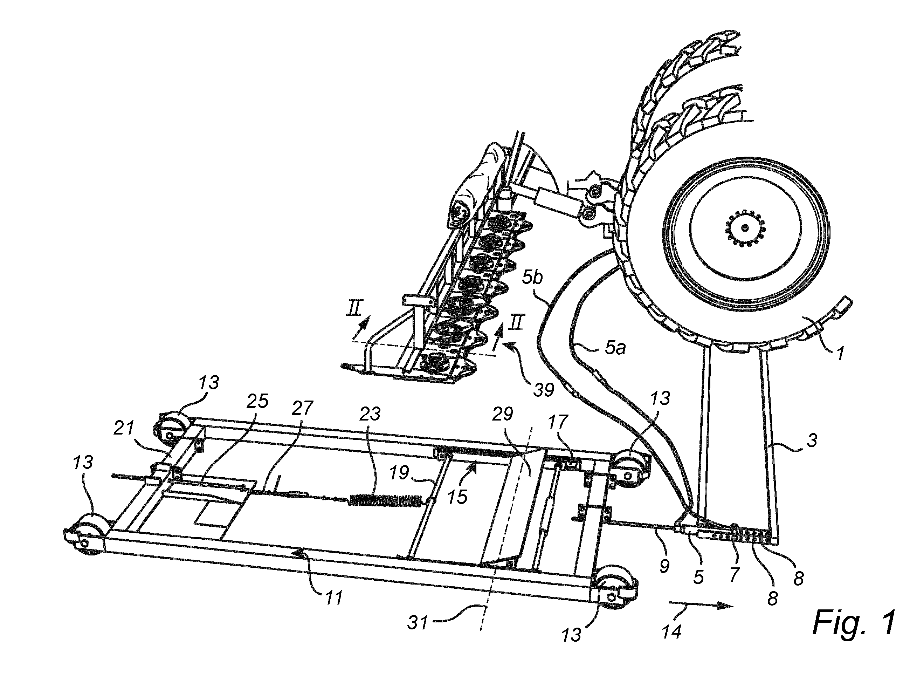

Fig. 1 shows the rear of a tractor parked with its rear wheels 1 on a base frame 3 of a test apparatus according to the invention. Thus the tractor fixes the base frame 3 on the ground.

At an end of the base frame 3 a hydraulic cylinder 5 is attached by means of a bolt 7. A piston rod 9 of the hydraulic cylinder 5 is attached to a front end 10 of a flat rectangular running frame 11 provided with running wheels 13 at its corners for the running frame 11 to be moved back and forth in a direction of movement 14 by means of the hydraulic cylinder 5. The bolt 7 securing the hydraulic cylinder 5 to the base frame 3 is insertable in any of a row of holes 8 in the base frame 3 for adjustment of the position of the running frame 11 relative to the base frame 3. The hydraulic cylinder 5 is connected to the hydraulic system of the tractor by means of hydraulic hoses 5a and 5b for the hydraulic cylinder 5 to be controlled from the tractor. A movable frame 15 is slidably attached inside the running frame 11 through grooves 17 to be slidable or shiftable in the direction of movement 14, forth and back in said grooves 17 between ends thereof. A rear end 19 of the movable frame 15 is connected to a rear end 21 of the running frame 11 through a spring 23, an adjustment rod 25 and an intermediate wire 27. The spring 23 pulls the movable frame 15 to the rear end of the grooves 17 with a pre-stress adjustable by means of the adjustment rod 25.

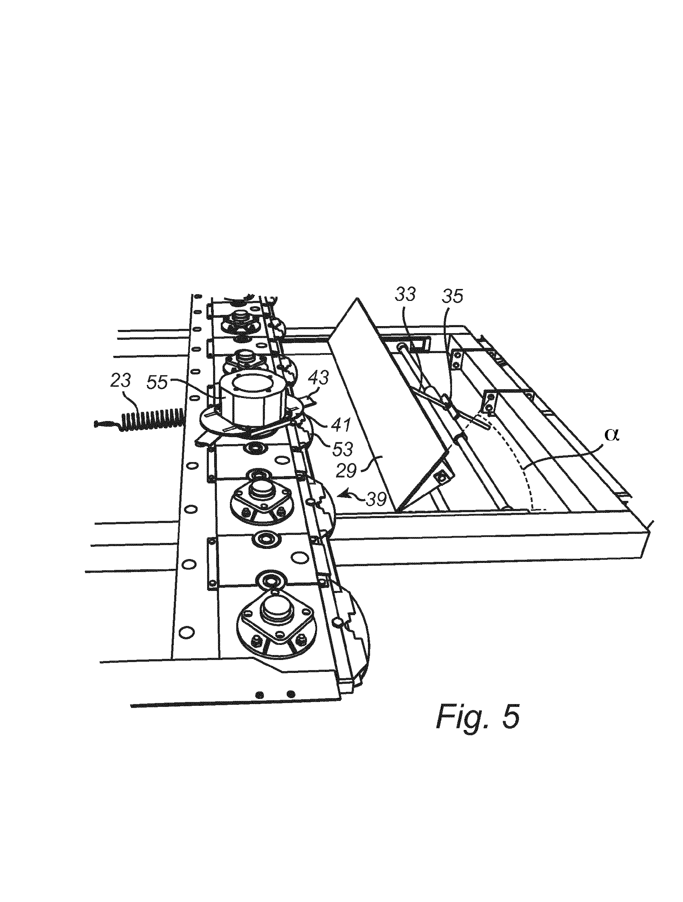

On the movable frame 15 a solid body in the shape of an impact plate 29 is mounted. The impact plate 29 is adjustable around a horizontal axis 31 extending perpendicular to the direction of movement 14 to be fixedly held in at least a number of predetermined angular positions with predetermined values of the angle of attack i.e. the angle α, cf. Fig. 5, between a vertical section of the top surface of the impact plate 29 and horizontal. In one embodiment cf. Fig. 5, the impact plate 29 is adjusted and held in angular position by means of a second threaded adjustment rod 33 carrying a nut 35 rotatably secured to the movable frame 15. Alternatively bolts and/or blocks may be used for fixing the impact plate 29 in a set angular position.

A mower 37 comprising a line of rotating elements or cutter bar assembly 39 with rotating discs 41 and cutting blades 43 to be tested by means of the test apparatus described so far is attached to the 3-point-linkage 45 of the tractor. A shaft 47 connects the PTO (power take off) of the tractor with the mower 37 to supply power to run the rotating discs 41. Thus the mower 37 is connected to the tractor as it would normally be connected for ordinary operation in a field.

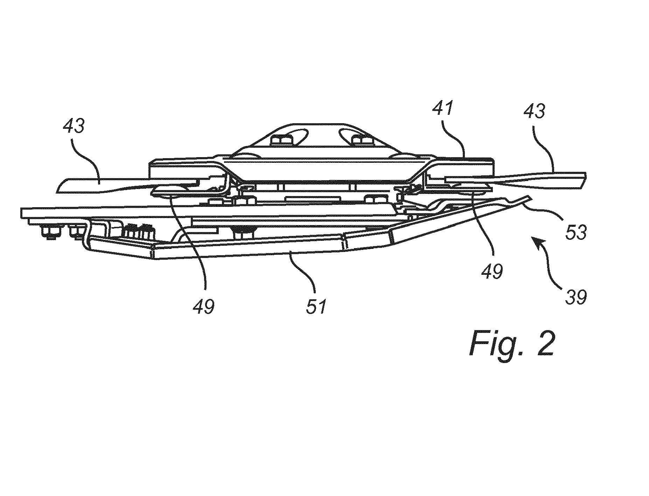

Referring to Fig. 2 the cutter bar assembly 39 comprises a carrier bar 47 carrying the rotating discs 41 each having rotatably attached at their periphery two cutting blades 43, which are secured by means of blade holders 49. Below the carrier bar 47 the cutter bar assembly is fitted with a glide shoe 51 and a stone protection 53.

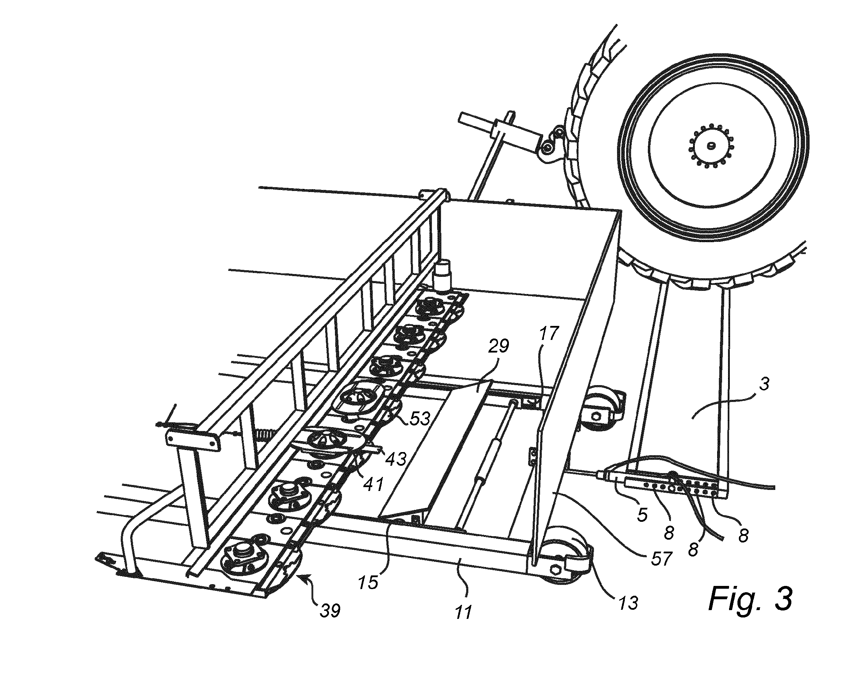

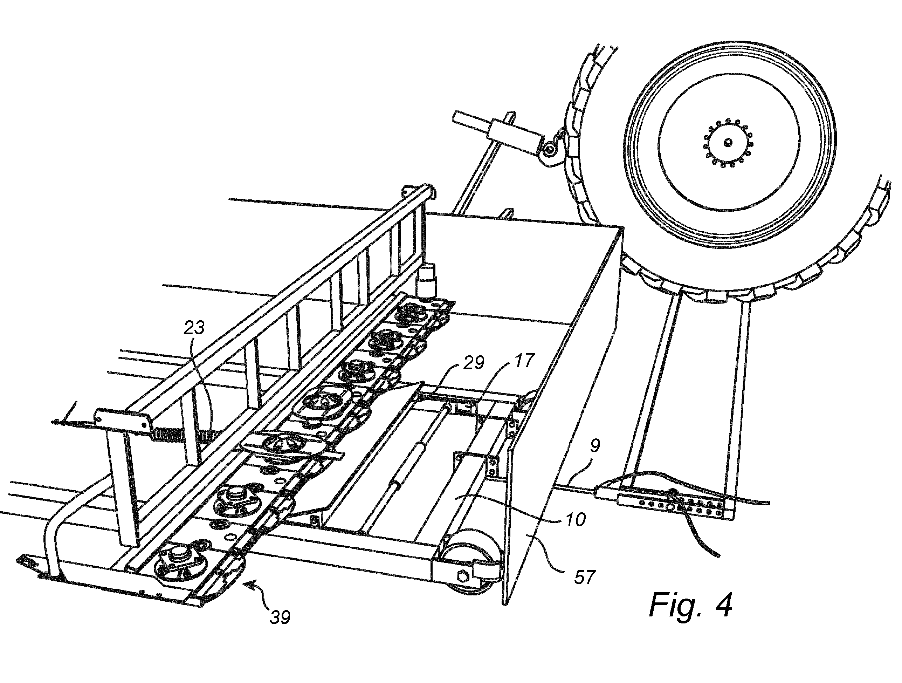

It should be noted that the mowers shown in the different Figures are equipped for testing relevant components and thus they are not necessarily fully equipped for field operation. Thus usual safety shielding is not equipped and not all rotating discs are mounted on the carrier bar. Thus in Fig. 1 the rotating disc outmost from the tractor is not mounted. In Figs. 3 and 4 only two rotating discs 41 are shown to be mounted, and in Fig. 5 only one rotating disc 41 is mounted. The latter is on top equipped with a crop carrier 55.

Some of the Figures show parts of shielding 57 provided around the mower during testing.

For conducting the test according to the invention the mower 37 is lowered to rest on the running frame 11 as it would be resting on a field surface during normal mowing operation in a working position. However any relief of the mower is reduced so that the mower rests heavily on the running frame 11. The top of the running frame 11 should be greased to reduce friction between the glide shoe 51 and the running frame 11. The angle of attack is set at a predetermined value e.g. 30°. This is the starting position shown in Fig. 3.

The rotating discs 41 are run at normal working or operation speed e.g. 3000 rpm and the piston rod 9 is extended under the control of the tractor's control system thereby moving the running frame 11 backwards opposite to the direction of movement 14, which is parallel to the normal travelling direction of the mower 37 during field operation. Thus the movable frame 15 and the impact plate 29 are likewise moved backwards and the planar upper surface or engagement surface of the impact plate 29 is moved into encounter or engagement with the cutter bar assembly 39 as the cutter bar assembly 39 would encounter with a stone or a rock in the field during field operation cf. Fig. 4. The planar engagement surface of the impact plate 29 will constitute a ramp against which the cutter bar assembly is run. The impact plate 29 and the movable frame 15 are stopped by the encounter with the cutter bar assembly 39 and the movable frame 15 slides through the grooves 17 towards the front ends thereof during the final part of the movement of the running frame 11 which is only moved a predetermined distance by the hydraulic cylinder 5.

It is noted that the hydraulic cylinder 5, the running frame 11, the first adjustment rod 25 the intermediate wire 27, the spring 23 and the movable frame 15 constitutes a drive train for moving the impact plate 29.

After the impact of the impact plate 29 against the cutter bar assembly 39 the force of the engagement therebetween is controlled by the spring 23 which limits the force of the engagement. The engagement is held for some time e.g. two seconds whereafter the piston rod 9 is retracted and the running frame is moved forward together with the movable frame 15 and the impact plate 29.

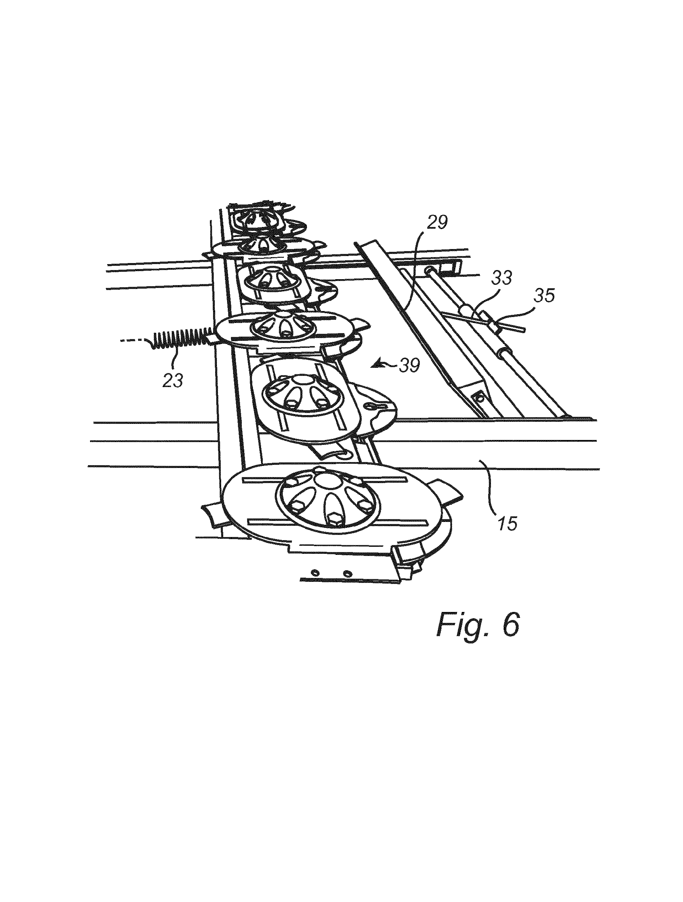

This procedure, which constitutes one test run, may be repeated with different angles of attack e.g. 67°, as shown in Fig. 5, and 120°, as shown in Fig. 6. Other angles of attack may be used e.g. 45°. The different angles of attack correspond to different types, shapes and sizes of rocks and stones likely to be found in an agricultural field. It is noted that whereas encounter with an angle of attack below 90°, as shown in Figs. 1 and 3-5 will tend to bend the cutting blade 43, the rotating disc 41 and the stone protection 53 upwards, an encounter with an angle of attack above 90°, as shown in Fig. 6, will tend to bend down those elements. After each test run damaged or likely-to-be-damaged parts, such as the cutting blades, should be substituted by new corresponding parts.

By the test method or procedure according to the invention not only the cutting blade 43 is tested but the blade holder 49, the disc 41, the stone protection 53, etc. is tested as well.

In the embodiment described above a so called lift-suspended disc mower is tested. Different types of agricultural mowers incorporating a line of rotating elements carrying cutting blades may be tested and the skilled person will easily envisage appropriate amendments to the test apparatus as described above to provide for encounter between a solid body i.e. the impact plate or another body and the line of rotating elements with the cutting blades of the different types of mowers.

## Claims

1. A test method for testing an agricultural mower having a line (39) of rotating elements (41) each of which is carrying at least one cutting blade (43) rotatably attached to the rotating element (41), said method comprising providing a solid body (29), running said rotating elements (41) at an operation speed and moving in a direction of movement (14) said solid body (29) and the line (39) of rotating elements with the cutting blades into mutual engagement and maintaining the engagement for a time with a limited force.

2. A test method according to claim 1, wherein said limited force is a spring force acting in the direction of movement.

3. A test method according to claim 1 or 2, wherein the solid body (29) comprises a planar engagement surface for the engagement with the line of rotating element, said engagement surface being kept at a predetermined angular position.

4. A test method according to claim 3, wherein a horizontal line defined by a horizontal section of the engagement surface extends perpendicular to the direction of movement (14).

5. A test method according to claim 3 or 4, wherein a vertical section of the engagement surface parallel to the direction of movement extends at a predetermined angle of attack (α) relative to horizontal.

6. A test method according to any of the claims 1 to 5, wherein the mower including the line (39) of rotating elements is kept at a predetermined position similar to a working position and the solid body (29) is moved in a horizontal plane against the mower.

7. A test method according to any of the claims 1 to 6, wherein the direction of movement (14) is similar to a travelling direction of the mower during mowing operation.

8. A test apparatus for testing an agricultural mower having a line (39) of rotating elements each of which is carrying at least one cutting blade (43) rotatably attached to the rotating element (41), said apparatus comprising a solid body (29) and means (3, 5, 11, 25, 27, 23, 15) for moving the solid body (29) and the line (39) of rotating elements into mutual engagement and maintaining the engagement for a time with a limited force.

9. A test apparatus according to claim 8, wherein the means for moving the solid body and the line of rotating elements into mutual engagement comprise a drive train (5, 11, 25, 27, 23, 15) incorporating a force transmitting spring (23).

10. A test apparatus according to claim 8 or 9, wherein the solid body (29) comprises a planar engagement surface for the engagement with the line (39) of rotating element, and means (33, 35) are provided for holding said engagement surface in a predetermined angular position.

11. A test apparatus according to claim 10, wherein the solid body (29) is mounted for angular adjustment around a horizontal axis non-parallel, preferably perpendicular, to a direction of movement (14).

12. A test apparatus according to any of the claims 8 to 11, comprising a movable frame (15) mounting the solid body (29).

13. A test apparatus according to claim 12, wherein the movable frame (15) is slidable mounted in a running frame (11) for shifting movement against a spring force, and means (5) are provided for moving the running frame (11).

14. A test apparatus according to claim 13, comprising a base member (3) configured for a tractor to stand on, and the drive train comprises a drive member (5) acting between the base member (3) and the running frame (11) for moving the latter.

15. A test apparatus according to claim 14, wherein the drive member comprises a hydraulic cylinder (5).
